Europäisches Patentamt

European Patent Office

Office européen des brevets

(11) Publication number: **0 396 073**
**A1**

## EUROPEAN PATENT APPLICATION

(21) Application number: **90108188.5**

(51) Int. Cl.⁵: **B62M 7/12**

(22) Date of filing: **30.04.90**

(30) Priority: **02.05.89 IT 8557489**

(43) Date of publication of application:
**07.11.90 Bulletin 90/45**

(84) Designated Contracting States:
**AT BE CH DE DK ES FR GB GR IT LI LU NL SE**

(71) Applicant: **Canderle, Giampietro**
**Via Cazzale, 29/30**
**I-36057 Arcugnano, Vicenza(IT)**

(72) Inventor: **Canderle, Giampietro**
**Via Cazzale, 29/30**
**I-36057 Arcugnano, Vicenza(IT)**

(74) Representative: **Dr. Ing. A. Racheli & C.**
**Viale San Michele del Carso, 4**
**I-20144 Milano(IT)**

(54) **A motorized bicycle wheel with built-in electric motor.**

(57) The wheel comprises an electric motor (4) integral with the pins (5 and 6) of the hub, to be mounted on the fork of the bicycle, said motor being connected by means of a freewheel (12) to the gear (10), which meshes with the crown gear (11), integral with the hub (1), to allow the wheel to be rotated by the electric motor itsel, which is extremely silent and powered by a recharging battery mounted on the bicycle itself.

EP 0 396 073 A1

## A MOTORIZED BICYCLE WHEEL WITH BUILT-IN ELECTRIC MOTOR

The aim of the present invention is to provide a motorized wheel with an electric motor in the hub, which is powered by a battery placed on the bicycle, for example anchored to the frame and which is charged when not in use, for example on the user's premises, it being possible to provide a battery charger incorporated in the bicycle frame

Obviously said battery, when charged, will allow the bicycle to travel a certain distance, for example a few tens of kilometers, which means that the motorized bicycle can be used, for example, for moving around in the city, or in any case for covering short distances.

Use of an electric motor makes the bicycle very quiet. It is also extremely flexible and the fact that it has pedals connected, in the usual manner, to the rear wheel, whereas the motor is preferably connected to the front wheel, means that the bicycle can still be used with pedals without any difficulty for the user, for example when the battery is flat or when the cyclist wishes to take some exercise.

Obviously the motorized wheel can be the front or rear wheel indifferently or electric motors can even be mounted on both wheels, while the battery can advantageously be carried on the bicycle rack or, if it is of limited thickness, it can be placed inside the bicycle frame.

Three particular embodiments of the front wheel are diagrammatically illustrated in the attached drawings, with an electric motor mounted inside a special hub and with mechanical arrangements indicated solely by way of unrestrictive example.

In these drawings:

Figure 1 (Plate 1) shows an overall side view of the front wheel with a motorized hub;

Figure 2 shows the axial section of the hub with the built-in motor and with a bevel gear and gear ring coupling;

Figure 3 (Plate 2) shows, again in axial sectional view, a second possible embodiment of the hub with a second type of mechanical coupling;

Figure 4 (Plate 3) shows the hub with a third type of mechanical coupling with double epicyclic gears, in a diagrammatic front view partly cut away along the line IV-IV of Fig. 5;

Figure 5 shows the same in a diagrammatic view in vertical axial section.

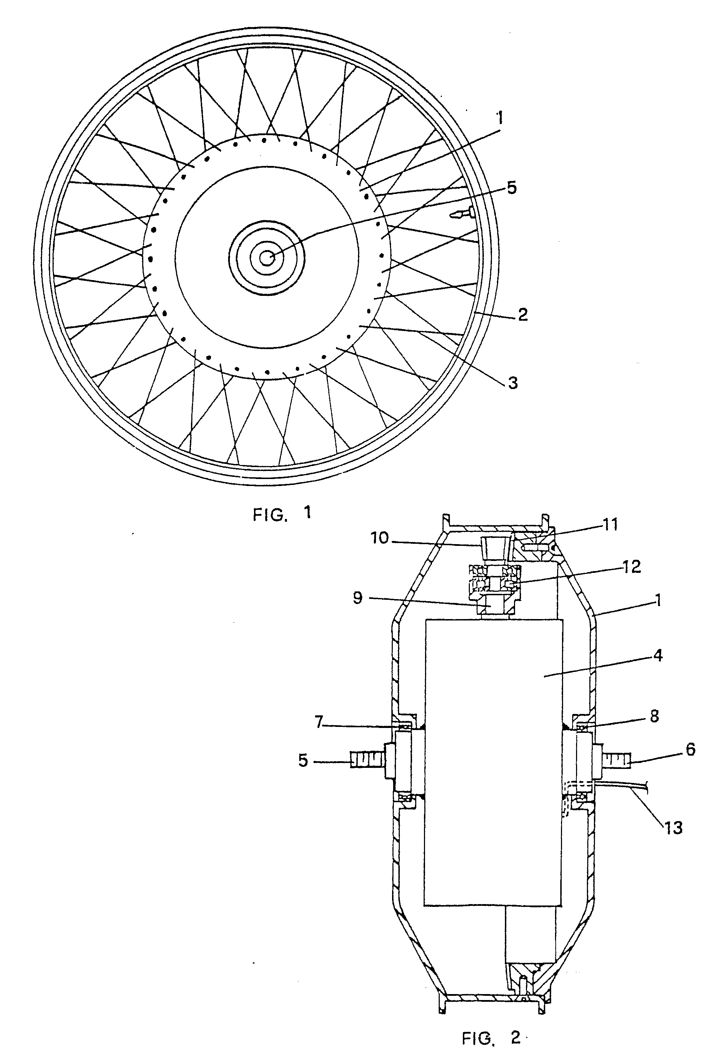

As can be seen from Figure 1, the motorized front wheel comprises a hub 1, with a relatively large diameter, connected to the rim 2 with spokes 3, according to a per se known arrangement.

An electric motor 4 (Fig. 2) is placed inside the hub 1, mounted in a rigid position on pins 5 and 6, in turn mounted on the bicycle fork.

The hub 1 can revolve on pins 5 and 6, thanks to the presence of bearings 7 and 8, which allow it to rotate.

Obviously if the wheel is the rear one, a freewheel will be mounted on the hub 1 so that the wheel can also be driven by the pedals, with the intervention of the chain - when the electric motor 4 is not running, obviously - either because the user wishes to propel the bicycle with the pedals or because the battery is flat so the bicycle cannot be driven by the electric motor.

The drive shaft 9 which departs from the motor block 4 has at its head a bevel gear 10, which meshes with the ring bevel gear 11, mounted on the hub 1.

The electric motor 4 is powered through conducting wires 13, in turn connected to the battery.

A speed regulator with a control on the handle bar allows the speed to be regulated and the motor power to be switched on and off.

The freewheel 12, which is of a per se known design, allows the hub 1 and consequently the, wheel 2 to turn, without driving the electric motor contained in the block 4 when the bicycle is propelled by the pedals, for example.

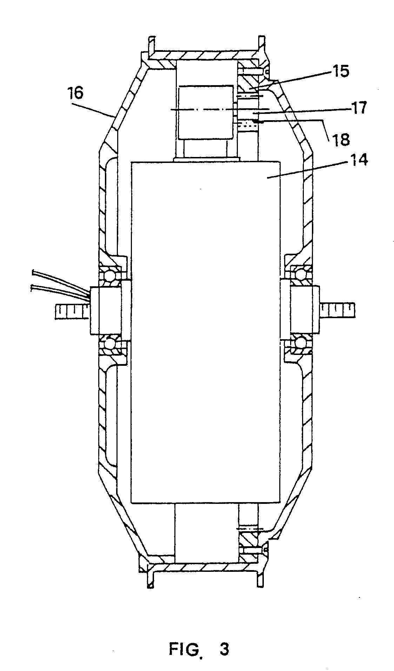

In the embodiment illustrated in Figure 3, the direct current motor, diagrammatically contained in the block 14 rotates the internal gear 15, integral with the case of the hub 16 of the motorized wheel, through the sprocket 17 and by means of a freewheel 18.

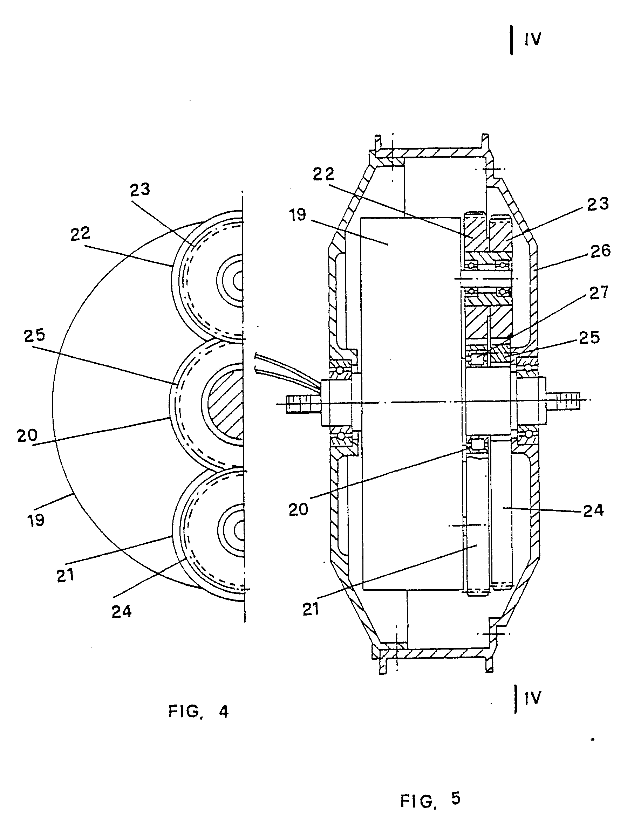

In a further possible embodiment, illustrated diagrammatically in Figures 4 and 5, the motor, contained in the block 19, rotates (by means of a double epicyclic train (20-21-22 and 23-24-25)) the case of the motorized wheel hub 26 with the intervention of the freewheel 27.

This type of mechanism makes it possible to obtain an optimal ratio of the r.p.m. of the hub 26, for example 94 r.p.m. when the motor is turning at 3000 r.p.m..

It will be noted that the driving gears 21 and 22 have a slightly greater diameter and number of teeth than gears 23 and 24, whilst the central gear 20 has a slightly smaller diameter and number of teeth than gear 25, so that the ratio of r.p.m. is in the order of 1/31.75.

As a result, when the number of revolutions of the motor is 4000 r.p.m., the number of revolutions of the motorized wheel will be about 127 r.p.m., ideal for the road.

Obviously also in the embodiments illustrated in Figures 4 and 5 a freewheel 27 will be inserted in the mechanical connection, to allow the wheel to turn even when it is not rotated by the motor and without rotating the motor. The movement of the wheel is thus rendered independent from that of the motor, both when the motor is not running and when it is turning at a lower speed than that called for by the wheel, whatever type of mechanical coupling is used between the motor and the wheel, so that the motor can always be smoothly connected to and disconnected from the wheel, even when the bicycle is moving.

The advantages offered by the use of a motorized wheel with an electric motor according to the invention are obvious, since it allows a bicycle to be provided with motorization, though limited and for relatively short distances - useful above all in cities - that is not noisy, does not pollute, is extremely flexible and is easy to recharge when the bicycle is not in use.

All these embodiments of the motorized wheel, as well as other structural variants, provided that they include a direct current motor which, through an appropriate drive mechanism, rotates the motorized wheel, must be considered to come within the scope of the patent.

**Claims**

1. A motorized bicycle wheel with a built-in electric motor, which comprises a relatively large central hub, joined by means of spokes to the rim of the bicycle wheel, characterized in that a case (4) is mounted inside the hub (1), said case being fixed to pins (5 and 6) to be mounted on the fork of the bicycle, the motor being connected, by means of a suitable mechanism, to the hub case (1), so as to allow the wheel to be rotated by the electric motor itself, contained in the case (4).

2. A motorized wheel, as in claim 1, characterized in that the mechanism that transmits the drive from the electric motor, contained in the case (4) to the hub (1) consists of a bevel pinion (10) which meshes with the ring gear (11) integral with the hub case (1).

3. A motorized wheel, as in claim 1, characterized in that drive transmission between the motor case (14) integral with the hub and the case (16) of the hub itself is achieved by means of a pinion (17) which meshes with the ring gear (15) integral with the case (16).

4. A motorized wheel, as in claim 1, characterized in that the mechanical coupling between the case (19) containing the electric motor and the ring gear (23), integral with the hub (26), is achieved by means of at least two pairs of epicyclic gears (20, 21, 22 and 23, 24, 25) which allow an optimal number of revolutions of the wheels to be achieved, with an optimal number of revolutions of the direct current electric motor.

5. A motorized wheel, as in claim 1, characterized in that a freewheel (18, 27) is provided in the mechanical coupling between the motor contained in the case (4, 14, 19) and the gear ring (11, 15, 23) integral with the hub (1, 16, 26) , in order to allow the wheel to turn, for example driven by the pedals, when the electric motor is not used or when it is running at a lower speed than that required by the already rotating wheel.

6. A motorized wheel, as in claim 1 and one of the claims from 2 to 4, characterized ih that an accumulator battery, possibly equipped with a battery charger, is mounted on the bicycle, being connected by means of electrical conductors (13) to the motor integral with the wheel hub, in order to be able to power it electrically during running, with the intervention of a regulator placed on the handle bar.

FIG. 1

FIG. 2

FIG. 3

IV

22

19

23

26

27

25

20

24

21

FIG. 4

23

22

25

20

19

21

24

IV

FIG. 5

## DOCUMENTS CONSIDERED TO BE RELEVANT

EP 90108188.5

| Category | Citation of document with indication, where appropriate, of relevant passages | Relevant to claim | CLASSIFICATION OF THE APPLICATION (Int. Cl.⁵) |
|---|---|---|---|
| X | <u>DE - A1 - 3 632 781</u> (ZERBST) * Claims 1,2,9,10,12 * | 1,5,6 | B 62 M 7/12 |
| X | <u>DE - A1 - 2 743 649</u> (KLOOSTER) * Fig. 2; claim 6 * | 1,5 | |
| X | <u>US - A - 4 346 777</u> (RESTELLI) * Abstract * | 1 | |
| A | <u>GB - A - 1 597 230</u> (POCLAIN) * Page 1, lines 86-88 * | 1 | |
| A | <u>CH - A - 296 226</u> (BOURGUIN) * Fig. 1; page 1, line 57 * | 1 | |
| Y | <u>GB - A - 1 566 994</u> (SIEMENS) * Fig. 1 * | 1-3 | TECHNICAL FIELDS SEARCHED (Int. Cl.⁵) |
| Y | <u>AT - B - E29 005</u> (ENOCSON) * Fig. 4 * | 1-3 | B 60 K B 62 M |
| A | <u>US - A - 4 330 045</u> (MYERS) * Abstract; fig. 2 * | 1,4 | |
| A | <u>US - A - 4 402 374</u> (KNUR) * Abstract * | 1,4 | |

The present search report has been drawn up for all claims

| Place of search | Date of completion of the search | Examiner |
|---|---|---|
| VIENNA | 11-07-1990 | BAUMGARTNER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82